Europäisches Patentamt

European Patent Office

Office européen des brevets

(11) Veröffentlichungsnummer: **0 104 350**
A2

## (12) EUROPÄISCHE PATENTANMELDUNG

(21) Anmeldenummer: 83107178.2

(22) Anmeldetag: 22.07.83

(51) Int. Cl.³: **C 09 K 3/28**
C 08 K 5/34, C 08 K 5/52

(30) Priorität: 03.08.82 DE 3228863

(43) Veröffentlichungstag der Anmeldung:
04.04.84 Patentblatt 84/14

(84) Benannte Vertragsstaaten:
BE CH DE FR GB IT LI NL SE

(71) Anmelder: BAYER AG
Konzernverwaltung RP Patentabteilung
D-5090 Leverkusen 1 Bayerwerk(DE)

(72) Erfinder: von Bonin, Wulf, Dr.
Mendelssohnstrasse 30
D-5090 Leverkusen 1(DE)

(54) Hilfsmittel für den vorbeugenden Brandschutz.

(57) Gegenstand der Erfindung sind Hilfsmittel für den vorbeugenden Brandschutz. Diese sind eine Kombination von mindestens zwei Substanzen, von denen eine ein Ethylendiaminphosphat und eine zweite Melamin und/oder ein Salz eines Cyanursäureabkömmlings ist.

EP 0 104 350 A2

Croydon Printing Company Ltd.

- 1 -

BAYER AKTIENGESELLSCHAFT          5090 Leverkusen, Bayerwerk

Zentralbereich
Patente, Marken und Lizenzen    Eck/Kü-c

Hilfsmittel für den vorbeugenden Brandschutz

Gegenstand der Erfindung sind Hilfsmittel für den vorbeugenden Brandschutz. Diese sind eine Kombination von mindestens zwei Substanzen, von denen eine ein Ethylendiaminphosphat und eine zweite Melamin und/oder ein Salz eines Cyanursäureabkömmlings ist.

Derartige Hilfsmittel für den Brandschutz sind z.B. bei Beflammung aufschäumende und einen feuerabweisenden und isolierenden Schaum bildende, ggf. thermoplatisch verarbeitbare Massen, die dadurch erhalten werden, daß man in Thermoplasten bei Temperaturen unter 210°C einen pulverförmigen Füllstoff, bestehend aus einem Gemisch von Ethylendiaminphosphat und Cyanursäureabkömmlingen einarbeitet. Weiterhin sind Gegenstand der Erfindung Formkörper aus solcherart modifizierten Thermoplasten.

Intumeszenzmassen sind Massen, die beispielsweise bei Beflammung unter Aufschäumen einen feuerabweisenden und gegen Hitze mehr oder weniger gut isolierenden Schaum aus organischem und/oder anorganischem Material bilden.

Le A 21 866- Ausland

Wegen dieser Eigenschaften können sie auf dem Gebiet des vorbeugenden Brandschutzes Verwendung finden. Sie werden seit langem als Lacke und Beschichtungen eingesetzt. In neurer Zeit auch in Form von Kitten oder als vorfabrizierte Plattenware.

Thermoplastisch verarbeitbare Kunststoffe mit Intumeszenzcharakter und beispielsweise gummielastischem Eigenschaftsbild sind bisher noch nicht eingeführt, obgleich hier ein großer technischer Bedarf (z.B. für Dichtungsmaterialien, Abdeckungen oder sonstige Konstruktionselemente im technischen Bereich des vorbeugenden Brandschutzes) besteht.

Das mag damit zusammenhängen, daß die bekannten Intumeszenz-vermittelnden Wirkstoffkombinationen nahezu sämtlich hygroskopische Eigenschaften haben, was zu starker Einschränkung der Gebrauchseigenschaften damit ausgerüsteter Basiswerkstoffe führen kann. Viele solcher Intumeszenzwirkstoffkombinationen zersetzen sich bei Temperaturen über 120°C, wodurch die Einarbeitbarkeit in Thermoplasten, die zumeist Temperaturen zwischen 100 und 200°C erfordert, behindert wird.

Weiterhin kann sich zeigen, daß Intumeszenz-vermittelnde Wirkstoffkombinationen nach Einarbeitung in höhermolekulare Basiswerkstoffe, (z.B. thermoplastische Kunststoffe, Elastomere) keine befriedigende Wirkung mehr zeigen, was Intumeszenz- und Brandverhalten betrifft.

Le A 21 866

Ethylendiaminphosphat ist bereits als für den vorbeugenden Brandschutz vorzüglich geeignetes Phosphat vorgeschlagen worden (DE-OS 2 938 874). Es ist nicht hygroskopisch, reagiert neutral und liefert bereits als solches bei Beflammung einen Intumeszenzschaum.

In Kombination mit Melamin wurde gefunden, daß Ethylendiaminphosphat besonders gut geeignet ist, z.B. als Zusatz zu Thermoplasten, diesen Inumeszenzeigenschaften zu verleihen.

Melaminphosphat selbst ist für diesen Zweck nicht geeignet, denn es hat allein keine Intumeszenzeigenschaften. Es ist lediglich geeignet, Thermoplasten eine gewisse Feuerwiderstandfähigkeit zu verleihen und ist für diesen Zweck auch bereits eingesetzt worden. Weiterhin reagiert Melaminphosphat infolge Hydrolyse stark sauer (pH 2 - 3), was oftmals unerwünscht ist.

Es wurde nunmehr gefunden, daß eine pulverförmige Wirkstoffmischung, bestehend aus Ethylendiaminphosphat und gegebenenfalls Cyanursäure und/oder deren Abkömmlingen, die mehr als 10 Gew.-% des Phosphats enthält die genannten Nachteile nicht aufweist und bei Temperaturen bis 210°C, bei schnellem Arbeiten auch bei noch höheren Temperaturen bis etwa 300°C, in Thermoplaste eingearbeitet werden kann. Dadurch können diese Intumeszenzeigenschaften erhalten. Diese Beobachtung ist von Interesse für die Überführung thermoplastisch

Le A 21 866

verarbeitbarer gummiartiger (d.h. elastomerer), oder harter oder plastischer Kunststoffe in massive, poröse oder geschäumte Intumeszenzwerkstoffe.

Die erfindungsgemäßen Kombinationen umfassen sowohl Kombinationen aus Melamin und Ethylenamindiphosphat als auch Kombinationen aus Salzen des Melamins, vorzugsweise Melaminphosphat und Ethylenamindiphosphat.

So reagiert beispielsweise eine erfindungsgemäße Kombination von z.B. gleichen Teilen Ethylendiaminphosphat und Melaminphosphat (1,4 Mol Melamin + 1 Mol $H_3PO_4$) nahezu neutral (pH 6,5) und verleiht verschiedensten Substraten Intumeszenzeigenschaften genauso wie die erfindungsgemäße Kombination Ethylendiaminphosphat/ Melamin, obgleich das Melaminphosphat selbst keine Intumeszenz vermittelt.

Demgemäß bezieht sich die vorliegende Erfindung auf thermoplastisch verarbeitbare Polymere bzw. polymere oder oligomere Werkstoffe mit Intumeszenzeigenschaften, die dadurch gekennzeichnet sind, daß sie eine intumeszenzvermittelnde Wirkstoffmischung aus Ethylendiaminphosphat und gegebenenfalls Cyanursäure bzw. deren Abkömmlingen und/oder deren Salzen eingearbeitet enthalten.

Insbesondere sind die thermoplastisch verarbeitbaren Polymeren bzw. polymeren oder oligomeren Werkstoffe mit Intumeszenzeigenschaften erfindungsgemäß dadurch gekenn-

Le A 21 866

zeichnet, daß sie ein pulverförmiges Gemisch aus Ethylendiaminphosphat und gegebenenfalls Melamin und/oder Melaminsalzen und Ethylendiaminphosphat-Gehalte über 10 Gew.-% eingearbeitet enthalten und das pulverförmige Gemisch mehr als 40 Gew.-% des Polymeren mit Intumeszenzeigenschaften ausmacht.

Weiterhin zeigen erfindungsgemäße Mischungen eine geringe Neigung zu "Kochen" und Abschmelzen des Substrates im Beflammungsfall, was ein brandschutztechnischer Vorteil ist, da so eine bessere Karbonisierungsschicht gebildet werden kann.

Weiterhin betrifft die vorliegende Erfindung ein Verfahren zur Herstellung von Intumeszenzmassen, z.B. Mörtel, Kitte, Lacke, Beschichtungen, Folie, harte oder flexible, thermoplastische oder duroplastische Formteile, die dadurch erhalten werden, daß man entsprechenden Substraten, seien z.B. anorganische oder insbesondere organische Bindemittel, Lacke, Gummimischungen, Thermoplaste oder Duroplaste in einem geeigneten Zeitpunkt vor der endgültigen Verarbeitung Kombinationen aus Ethylendiaminphosphat und Cyanursäure bzw. deren Abkömmlingen bzw. deren Salzen, wie etwa Melamin (Phosphat) hinzumischt bzw. diese in jenen erzeugt.

Auch die genannten Kombinationen selbst, d.h. ohne zusätzliche Bindemittel können naturgemäß als Intumeszenzmassen, d.h. intumeszierende Pulver, Granulate oder Beschichtungen eingesetzt werden.

Le A 21 866

Demgemäß sind Gegenstand der vorliegenden Erfindung auch:

1. Werkstoffe und Formteile mit Intumeszenzeigenschaften, dadurch gekennzeichnet, daß sie als intumeszenzvermittelnden Wirkstoff Ethylendiaminphosphat in Kombination mit Cyanursäureabkömmlingen und/oder deren Salzen enthalten,

2. insbesondere Oligomere, Polymere, bzw. oligomere und/oder polymere Werkstoffe gemäß 1., dadurch gekennzeichnet, daß sie mindestens 10 Gew.-% Ethylendiaminphosphat in Kombination mit Melamin und/oder dessen Salze eingearbeitet enthalten und daß das eingearbeitete Material mindestens 20 Gew.% des Werkstoffs mit Intumeszenzeigenschaften ausmacht,

3. die Verwendung von Werkstoffen mit Intumeszenzeigenschaften gemäß 1. und 2. zur Herstellung von Formkörpern und

4. Konstruktionselemente bzw. Formteile mit Intumeszenzeigenschaften, hergestellt unter Verwendung der Werkstoffe gemäß 1. und 2.

Das heißt, die erfindungsgemäße Kombinationen können z.B. Kunststofflatices oder Lacklösungen beigemischt werden. Aus diesen können Beschichtungen und Intumeszenzeigenschaften hergestellt werden, die den damit

Le A 21 866

beschichteten Materialien Schutz gegen Beflammung verleihen. Die erfindungsgemäße Mischung kann in eine oder beide Komponenten von Polyesterharzen oder Epoxidharzen mit gleichem Erfolg eingemischt werden. Sie kann bei Temperaturen von 150 - 200°C verarbeitbaren Thermoplasten oder Kautschuken hinzu gefügt werden und erhält dann z.B. Folien oder Extrudate mit Intumeszenzeigenschaften, die auf dem Gebiet des vorbeugenden Brandschutzes Einsatz finden.

Von besonderem Interesse ist die erfindungsgemäß gegebene Möglichkeit, thermoplastisch verarbeitbare Werkstoffe und Formteile auf Polymerbasis mit Intumeszenzeigenschaften herzustellen. Diese besitzen hervorragende brandtechnologische Eigenschaften und sind halogenfrei.

Als thermoplastisch zu verarbeitende spröd-harte, hartzähe, plastische oder elastische Polymere bzw. polymere Werkstoffe werden erfindungsgemäß nicht nur die reinen Polymeren betrachtet sondern auch Polymergemische bzw. Mischpolymerisate, Pfropfpolymerisate, Pfropfmischpolymerisate, Blockpolymerisate und deren Mischformen, sowie mit Weichmachern, Füllstoffen, Fasern, Pigmenten, Wirkstoffen modifizierte Polymerisate. Es kann sich um aromatische, aliphatische, araliphatische, heterocyclische Polyadditions-, Polykondensations-, Poly-oxidations- oder Vinylpolymere und deren Mischformen handeln.

Beispielsweise wären zu nennen Polyurethane, Polyharnstoffe, Polycarbodiimide, Polyether, Polyetherester,

Le A 21 866

Polyimide, Polysulfone, Polysulfide, Polyoxyde, Polyamide, Polyamine, Polyvinylester, Polyvinylhalogenide, Polyvinylaromaten, Polymethacrylate, Polyacrylate, Polydiolefine, Polyolefine bzw. Copolymerisatformen und Mischformen dieser Polymertypen.

Besonders in Betracht zu ziehen sind hierbei solche Polymeren, die sich bei Temperaturen unter 300°C insbesondere bei Temperaturen unter 220°C thermoplastisch verarbeiten lassen.

Gut geeignete Polymere in diesem Sinne sind beispielsweise Polyurethane auf Basis von aliphatischen und/oder aromatischen-Polyisocyanaten und Polyester- bzw. Polyetherpolyolen, Vinylacetat(misch)polymere, Vinylchlorid-(misch)polymere, aliphatische und/oder teilaromatische Polyester und Polyamide, Polyolefine, bzw. deren elastische, bzw. plastische Copolymerisate. Beispielhaft wären hier zu nennen Polyadditionsprodukte aus Toluylendiisocyanat und/oder Diphenylmethandiisocyanat und/oder Hexamethylendiisocyanat und Adidpinsäurepolyestern und/oder Ethylenoxyd/Propylenoxidpolyethern, Copolymere aus Vinylchlorid und Vinylacetat mit gegebenenfalls noch weiteren Vinylmonomeren, Butadien-Styrol-Copolymerisate bzw. Block-Copolymerisate, Ethylen-Propylen-(Block)-Copolymerisate, Ethylen-Ethylacrylat-Copolymerisate, Ethylen-Vinylacetat-Copolymerisate, Homo- und Copolymerisate des Styrols, Polyethylen, Polypropylen, Polyisobutylen, Methylmethacrylat und seine Copolymerisate.

Le A 21 866

Als Ethylendiaminphosphat wird erfindungsgemäß vorwiegend das Neutralisationsprodukt aus Ethylendiamin und Orthophosphorsäure verstanden. Es ist im erfindungsgemäßen Sinne von Vorteil, dieses Aminphosphat als Phosphatbestandteil der Intumeszenz-vermittelnden Wirkstoffmischung einzusetzen, da es neutral reagiert. Bei Ammoniumphosphaten, insbesondere Ammoniumpolyphosphaten, die als Phosphatbestandteil von Intumeszenzmassen bekannt sind, kann durch hydrolytische Einflüsse, denen ein Intumeszenzmaterial oftmals in der Praxis ausgesetzt ist, aus dem Polyphosphat überschüssige Säure gebildet werden, die zu Korrosionen Anlass geben kann. Im Einzelfall kann es möglich sein, neben dem Ethylendiaminphosphat auch andere Phosphate, etwa Ammoniumpolyphosphat mitzuverwenden.

Das Polymere mit Intumeszenzeigenschaften soll mindestens 10 Gew.-% Ethylendiaminphosphat eingearbeitet enthalten. Es können auch bis zu 100 Gew.-% an Phosphat allein als Intumeszenzmittel dienen.

Als weiterer Bestandteil der Wirkstoffmischung wird gegebenenfalls Cyanursäure und/oder deren Derivate oder Abkömmlinge, d.h. Cyanursäure bzw. Verbindungen, die sich als Cyanursäure- bzw. Isocyansäureankömmlinge verstehen lassen, eingesetzt. Solche sind z.B. Urazole, Melamin-urazolat, Cyanamid, Dicyanamid, Dicyandiamid, Amelid, Melamincyanurat, Cyanursäuresalze und Cyanursäureester- und -amide, sowie Salze von Cyanursäureabkömmlingen wie

Le A 21 866

Cyanamid, Dicyanamid, Hydrazodicarbonamid, Dicyandiamid, Guanidin und deren Salze, Biguanid, Urazol,
Urazolcyanurat, Melamincyanurat, Cyanursäuresalze und
Cyanursäureester und -amide, insbesondere Melamin
und/oder seine Salze, das wegen seiner guten Zugänglichkeit bevorzugt wird.

Als Melamin wird vorzugsweise der Grundkörper 2,4,6-
Triamino-s-Triazin verstanden, es sind jedoch z.B.
auch dessen durch thermische Bedingungen oder Umsetzung
mit Formaldehyd erhältlichen Kondensationsprodukte in
Betracht zu ziehen.

Gemäß der Erfindung sollen auch Harnstoff, Guanidin,
Allophanat, Biurett, Dicyandiamid, deren Polykondensationsprodukte und vorwiegend deren wasserunlösliche
gegebenenfalls sauer oder basisch modifizierten Formaldehydkondensationsprodukte bzw. deren Salze miterfaßt werden.

Aus Gründen der guten Zugänglichkeit bei guter Unempfindlichkeit gegen Wasser wird vorzugsweise Melamin
als Cyanursäureabkömmling verwendet.

Die Salzbildung kann bei sauren Cyanursäureabkömmlingen
durch basische Komponenten wie Ammoniak, Amine, Alkali-,
Erdalkali-, Erdmetallionen oder sonstige anorganische
und organische Basen erfolgen. Bei basisch reagierenden
Cyanursäureabkömmlingen kann sie mit organischen oder
anorganischen sauren Komponenten durchgeführt werden,
z.B. Trimellitsäure, Pyromellitsäure, Malonsäure,
Citronensäure, Oxalsäure, Trichloressigsäure, HCl,

Le A 21 866

Schwefelsäuren, Sulfonsäuren, Salpetersäure, Borsäure, insbesondere aber mit Säuren auf Phosphorbasis, z.B. Orthophosphorsäure und deren verschiedene Dehydratisierungsprodukte, wie Pyro-, Meta- oder Polyphosphorsäure, Phosphorigesäure, Phosphonsäuren, Phosphinsäuren usw. Als Salze seien beispielhaft genannt: Melaminphosphat, Melaminoxalat, Melaminacetat, gemischte Salze wie Melaminphosphat-oxalat usw.

Die Salzbildung kann stöchiometrisch, überstöchiometrisch oder vorzugsweise unterstöchiometrisch erfolgen, z.B. in dem auf ein Mol Melamin weniger als ein Mol Orthophosphorsäure zur Salzbildung verwendet werden.

Von besonderem Interesse im Sinne der Erfindung sind Phosphate vom Melaminphosphat-Typ. Unter diesen werden vorzugsweise Umsetzungsprodukte aus 1 Mol Melamin mit 0,01 bis 2,5, vorzugsweise 0,1 bis 1,0 Mol ortho-Phosphorsäure verstanden. Es können auch andere Phosphorsäuren, wie Meta-, Pyro- oder Polyphosphorsäure oder solche mit anderen Wertigkeitsstufen des Phosphors in Betracht gezogen werden. Die Herstellung der Phosphate geschieht z.B. durch Umsetzung von Melamin mit $H_3PO_4$ in wäßriger Suspension bei 10 - 120°C, abkühlen, filtrieren und trocknen. Mischungen von Melamin mit Melaminphosphate hohen Gehaltes an Phosphorsäure können anstelle von Melaminphosphaten mit niedrigem Phosphorsäuregehalt verwendet werden.

Le A 21 866

Im generellen erfindungsgemäßen Verständnis werden auch solche Phosphate als "Phosphate vom Melamin-Phosphat-Typ" bezeichnet, die in Wasser unter 5 Gew.-%, vorzugsweise unter 1 Gew.-% löslich (in Form der gesättigten Lösung bei Raumtemperatur) sind und gegebenenfalls durch Addition von z.B. Phosphorsäuren an Cyanursäureabkömmlinge entstehen, z.B. an Cyanamid, Dicyanamid, Hydrazodicarbonamid, Dicyandiamin, Guanidin, Biguanid, Urazol, Urazolcyanurat, Melamincyanurat, Cyanursäuresalze und Cyanursäureester und -amide, vernetzte oder unvernetzte Formaldehydkondensate von Harnstoff, Melamin, Dicyandiamid, Guanidin, insbesondere aber Melamin, das wegen seiner guten Zugänglichkeit bevorzugt wird.

Es können auch Gemische verschiedener Salze bzw. Cyanursäureabkömmlinge Verwendung finden.

In dem mindestens zweikomponentigen Gemisch soll der Anteil des Ethylendiaminphosphates mindestens 1 %, möglichst 5 - 95 Gew.-%, vorzugsweise 10 - 75 Gew.-% betragen.

Die Mischungskomponenten können in vorgemischter Form eingesetzt werden, z.B. bei Verwendung von Salzen nach gemeinsamer Herstellung in einem einstufigen

Le A 21 866

Neutralisations- bzw. Herstellungsprozeß, durch gemeinsames Vermahlen der fertig vorliegenden Salze oder z.B. durch einfaches Mischen vorgefertigter Salze. Die Mischungskomponenten können auch bei Formulierungen z.B. von Brandschutzkitten oder Polymerblends, nacheinander zugesetzt werden. Auch eine einzelne oder gemeinsame Herstellung in einem Bindemittel aus den zur Salzbildung befähigten Komponenten in situ kann in Betracht kommen. Vorzugsweise werden die einzelnen Komponenten beim Formulieren als fertige Vormischung oder getrennt nacheinander zugesetzt.

Das erfindungsgemäße Gemisch wird als intumeszenzvermittelnder Wirkstoff selbst oder in Bindemittel eingearbeitet verwendet. Diese Bindemittel sind zumeist oligomere bzw. polymere Materialien, bzw. Lösungen, Dispersionen, Suspensionen, Mischungen oder Schmelzen, Pulver oder Granulate.

Aus der Vielzahl der hier erfindungsgemäß in Betracht zu ziehenden Möglichkeiten seien beispielhaft aufgeführt; Natürliche Bindemittel, wie Eiweiß, Gelatine, Kasein, Stärken, Dextrane, aufgeschlossene Cellulose, z.B. Methyl- oder Ethyl- oder Oxyethyl- oder Carboxymethylcellulose in Form ihrer wässrigen Lösungen, Kautschuklatices, Latices von Polyurethanen oder Vinylpolymerisaten wie Polyvinylacetat oder Polyvinylchlorid oder Polyacrylate enthaltende Latices oder Lösungen. Lackharze und deren Lösungen z.B. Alkydharze, Cyclokatuschuke, Chlorkautschuke, Lacke auf

Le A 21 866

Basis von ungesättigten Fettsäurekondensaten, Polyestern, Polyethern, Polyurethanen, Epoxiden, Polyamiden, Polyimiden, Polymethylolen, Thermoplaste wie Polystyrole, Polyolefine, etwa Polyethylen, Polypropylen, Polybuten, Polychloropren, Olefincopolymere, etwa Ethylenvinylacetat-copolymerisate, Ethylencopolymere mit (Meth) Acrylsäure und/oder deren Estern, Styrol-Butadienblockpolymere, bzw. Polyolefinkautschuke, Phenolharze, Melaminharze, Harnstoffharze, Silikonharze, oder Kautschuken; Duromere wie Epoxidharze, Polyurethanharze, Furanharze, Polyacrylatharze, Polyallylharze, Polyesterharze, viskose Bindemittel wie trocknende Öle oder Firnisse, Teere, Bitumina, gegebenenfalls verdickte Fette, Vaseline, hochviskose Polyester oder Phosphonate, Doppelbindungsoligomere oder reaktionsfähige oligomere oder polymere Grundlagenmaterialien z.B. auf Silikon-, Acrylate, -Polyurethan- oder Epoxidbasis, Polysulfidbasis, Fettsäurebasis, wie sie z.B. zur Herstellung von Luftsauerstoff- oder Feuchttigkeits- vernetzenden Kitten Verwendung finden.

Die Einarbeitung der erfindungsgemäßen Salzmischung führt zu Werkstoffen und späterhin Formteilen, Beschichtungen oder Konstruktionselementen, die sich durch Halogenfreiheit der Intumeszenzmischung und gute Feuerwiderstandsfähigkeit bei gutem Intumeszenzverhalten unter Beflammung auszeichnen. Das Intumeszenzverhalten kann weitgehend mit dem Gehalt der Salzmischung an Ethylendiaminphosphat proportional beeinflußt werden.

Le A 21 866

Die Intumeszenzwerkstoffe sollen, 5 - 95 Gew.-%, vorzugsweise 20 - 95, insbesondere 40 - 80 Gew.-% des erfindungsgemäßen Gemisches enthalten. Im allgemeinen sind mindestens 30 % des Gemisches als Anteil im Intumeszenzwerkstoff anzustreben, um eine gute Intumeszenz bei guter Feuerwiderstandsfähigkeit zu erzielen.

Weiterhin kann die in die Polymeren einzuarbeitende Intumeszenzeigenschaften vermittelnde Wirkstoffmischung noch sonstige Füllstoffe, Pigmente, farbgebende Komponenten, Geruchsstoffe, Gleitmittel, Stabilisatoren, Treibmittel, Fasern, Vernetzer, Weichmacher, halogenhaltige oder halogenfreie, Antimon oder Bor enthaltende zusätzliche Flammschutzmittel enthalten, z.B. Füllstoffe, Hohlperlen, Pigmente, Weichmacher, Stabilisatoren, Verstärkungsfasern, Verdicker, Verflüssiger, Gleitmittel, Lösungs- und Verdünnungsmittel, usw. Sie können als Anstriche, bzw. Anstrichmittel, Beschichtungen, bzw. Beschichtungsmittel, als Gießharze, bzw. Formteile, als thermoplastische oder vulkanisierbare Kautschuke, bzw. mehr oder weniger flexible Formteile, als thermoplastisch verarbeitbare harte oder weiche Materialien bzw. durch Verpressen, Extrudieren, Spritzgießen, Tiefziehen, Kalandrieren oder andere Wärmeverformungsverfahren herstellbare Formkörper verwendet werden. Sie können der Bestandteil von Mörteln oder Kitten, Dichtungsmassen oder Klebstoffen sein.

Le A 21 866

Die Wirkstoffmischung kann dem Polymeren bereits während der Herstellung, während der Aufarbeitung oder während etwa notwendiger Misch- bzw. Formulierungsschritte ganz oder teilweise zugemischt werden, wobei Hilfslösungsmittel mitverwendet werden können. So kann die Wirkstoffmischung z.B. gemeinsam mit Weichmachern wie z.B. Adipinsäureestern, Phthalsäureestern, Phosphonsäureestern, PVC- oder Elastomermischungen zugesetzt werden.

Zumeist wird die Wirkstoffmischung dem thermoplastisch zu verarbeitenden Polymeren auf der Walze oder in einer Mischtrommel bzw. auf Knetern oder Schneckenmaschinen bei Temperaturen zwischen 20 und 220°C, vorzugsweise 100 - 180°C, zugemischt. Hierbei ist es von Vorteil, wenn die Wirkstoffmischung in granulierter Form oder vorzugsweise als Pulver, das durch ein Sieb der Maschenweite 0,125 mm zu mindestens 95 Gew.-% gesiebt wurde, vorliegt.

Die erfindungsgemäß zugänglichen thermoplastisch verarbeitbaren Polymeren können durch übliche thermoplastische Verarbeitungsverfahren, z.B. durch Walzen, Extrudieren, Blasen, Pressen, Tiefziehen, Verspritzen, Sintern zu Folien, Platten, Profilen, Rohren, Profilen verschiedenster Gestaltung oder sonstigen Formkörpers verarbeitet werden. Hierbei sind Polymere bzw. Verarbeitungsverfahren bevorzugt, die gestatten bei Temperaturen unter 300°C, vorzugsweise bei Temperaturen unter 220°C zu arbeiten.

Le A 21 866

So lassen sich viele Elastomere, z.B. Olefincopolymerisate wie Ethylen-Vinylacetat-Copolymerisate auf Walzen bereits bei Temperaturen unter 180°C mit der erfindungsgemäßen Wirkstoffmischung ausrüsten, bzw. zu Folien, Bändern und Profilen verarbeiten.

Die so hergestellten Folien, Profile, Formteile werden auf dem Gebiet des vorbeugenden Brandschutzes eingesetzt, wobei von Vorteil ist, daß die Formteile nicht nur im Brandfalle eine Intumeszenzwirkung besitzen, sondern vielfach durch den erfindungsgemäßen Wirkstoffanteil schwer entflammbar oder selbstverlöschend sind.

Die erfindungsgemäßen Polymerzubereitungen dienen zur Herstellung von verschiedensten Artikeln für den vorbeugenden Brandschutz wie z.B. Folien, und gegebenenfalls mit Klebstoffen, Verstärkungsfasern oder -geweben oder Metallfolien ausgerüsteten Bändern zum Abdecken oder Umwickeln von Elektrokabeln oder Rohren, zur Herstellung von Kabelmänteln, Rohren und Dichtungen, oder Formteilen im Klima-, Schallschutz-, Elektro-, Isolier- bzw. Installationsbereich.

Weiterhin dienen sie z.B. als Fugenprofile, Dichtungsprofile für Türen, Fenster oder Mauerfugen, Fußböden oder Decken, Hohlformen, Gehäuse für zu schützende Bauteile, Einrichtungen, Anlagen oder flexible oder starre Abdeckungen für Maschinen und/oder Geräte, wobei diese wiederum mit Geweben, Vliessen, Tragekonstruktionen aus brennbarem oder nicht brennbarem Material in Form von Sandwiches,

Le A 21 866

Beschichtungen, Schichtstoffen, Lackierungen usw. kombiniert sein können. Sie können durch Verkleben, Verschweißen, Cokalandrieren, Coextrudieren usw. verarbeitet werden.

Die folgenden Beispiele sollen den Erfindungsgegenstand nicht einschränken, sondern beispielhaft erläutern. Die angegebenen Teile und Prozente beziehen sich auf das Gewicht, falls nichts anderes angegeben ist.

Le A 21 866

## Beispiele

I) Beispiele 1 - 15 für Mischungen von Melamin mit Ethylendiaminphosphat

Die angegebenen Teile sind Gewichtsteile, sofern nichts anderes vermerkt ist.

Ausgangsmaterialien:

Alle pulverförmig eingesetzten Materialien wurden durch ein Sieb mit einer Maschenweite von 0,125 mm im Quadrat gesiebt.

Ethylendiaminphosphat: (Komponente A)

Ethylendiamin wurde in wässriger 20 %-iger Lösung mit 85 %-iger wässriger Ortho-phosphorsäure unter Rühren langsam versetzt, bis die wässrige Phase bei 20°C neutral reagierte. Die neutrale Lösung (Umsetzungsgemisch) wurde im Vakuum eingedampft und in der Kugelmühle gepulvert. Korndurchmesser 0,15 mm.

Melamin: (Komponente B)

Technische, handelsübliche Ware, gesiebt.

Polymeres K:

Handelsübliches Ethylen Copolymerisat mit einem Vinylacetatanteil von ca. 45 %, Elastomer.

Polymeres K 1: Wie Polymeres K, jedoch mit 20 Gew.-% eines
Polyesters aus Adipinsäure, Glyzerin und
Glykol (OH-Zahl 250) versetzt.

Polymeres L:

Thermoplastisch verarbeitbares Polyurethanelastomer im
wesentlichen aus Adipinsäure-diethylenglykol-Polyester
und 4,4'-Diphenylmethandiisocyanat und Butylenglykol.

Polymeres M:

Gemisch aus einem Copolymerisat aus 60 Teilen Vinylchlorid und 40 Teilen Vinylacetat und 25 Teilen Diphenyl-Kresylphosphat. Plastisches Material.

Polymeres N:

Polyester aus Adipinsäure und Ethylenglkol (zäh-hart).

Polymeres O:

Copolymerisat aus 40 Teilen Styrol, 20 Teilen Methylmethacrylat und 40 Teilen Butylacrylat, zäh-hart.

Polymeres P:

Butadien-Styrol-Copolymerisat mit einem Styrolgehalt
von ca. 25 Gew.-%.

Polymeres Q:

Copolymerisat aus Styrol und gleichen Teilen Methylmethacrylat.

Le A 21 866

Die Einarbeitung der Komponenten A und B in Mengen von 75 Gew.-% bezogen auf Gesamtmischung erfolgte auf einer Knetwalzenanlage bei 160°C in das von dem jeweiligen Polymer gebildete Walzfell. Lediglich das Polymere P wurde in Form eines 50 %-igen Latex mit den Komponenten abgemischt, getrocknet und in ein Walzfell überführt.

Die Walzfelle wurden anschließend granuliert und das Granulat bei 180°C auf einer geheizten Presse zu 5 mm dicken Pressplatten für Prüfzwecke verarbeitet.

Musterfolien wurden in 1,5 mm Stärke aus dem Granulat auf einem Walzenstuhl bei ca. 170°C hergestellt.

Zur Intumeszenzprüfung wurden Probekörper mit 20 x 30 mm Basisfläche und 1,5 bzw. 5 mm Höhe in einen auf 350°C vorgeheizten Umluftschrank gebracht und nach 10 Minuten das erfolgte Aufschäumen (Intumeszenzverhalten) beurteilt. Dabei wurde eine Volumenvergrößerung um mehr als 200 % mit 1 und keine Volumengrößerung mit 6 und entsprechend die dazwischen liegenden Volumenzuwächse benotet.

Eine entsprechende Benotung erfolgte beim Beflammungsversuch, wobei die Prüfkörper auf einem Drahtnetz mit 1 mm-Maschenweite waagerecht liegend von oben mit einer blau brennenden Bunsenbrennerflamme 3 Minuten lang beaufschlagt wurden. Hierbei wurde alle 30 Sekunden die Flamme für 10 Sekunden entfernt und ein eventuelles Nachbrennen registriert.

Le A 21 866

- 22 -

Benotung: 1 = kein Nachbrennen 2 = Nachbrennen 3 Sekunden 3 = Nachbrennen 3 - 6 Sekunden 4 = Nachbrennen 6 - 10 Sekunden 5 = Nachbrennen 10 Sekunden

Le A 21 866

Le A 21 866

| Beispiel Nr. | 1 | 2 | 3 | 4 | 5 | 6 | 7 | 8 | 9 | 10 | 11 | 12 |
|---|---|---|---|---|---|---|---|---|---|---|---|---|
| Polymeres | K | $K_1$ | K | K | K | L | M | M | N | O | P | Q |
| % A im Gemisch A + B | 25 | 50 | 60 | 100 | 65 | 70 | 50 | 40 | 50 | 100 | 75 | 50 |
| Pressplatte | | | | X | | | | X | X | X | | X |
| Folie | X | X | X | X | | X | X | | | | X | |
| Intumeszenz 350°C | 3 | 1 | 1 | 1 | 1 | 1 | 1 | 1 | 1 | 2 | 3 | 2 |
| Beflammung | 2 | 1 | 1 | 1 | 1 | 1 | 2 | 2 | 1 | 1 | 1 | 2 |
| Nachbrennen | 4 | 3 | 1 | 1 | 1 | 1 | 1 | 1 | 1 | 2 | 2 | 2 |

Tabelle 1

Die Ergebnisse der Prüfungen auf Intumeszenz- und Brandverhalten bei den verschiedenen erfindungsgemäß ausgerüsteten Polymeren sind in Tabelle 1 zusammengefaßt.

0104350

- 24 -

Beispiel 13

Ein handelsübliches Kunststoff-ummanteltes dreiadriges Lampenkabel wird in 20 cm lange Stücke geschnitten (Durchmesser des Kabels etwa 7 mm). 10 cm eines solchen Kabelprüfstückes werden mit einer Folie gemäß Beispiel 3 dicht ummantelt, wobei die Ummantelung durch einfaches Verschweißen der Folienbahn mittels eines Lötkolbens zu einem Folienschlauch fixiert wird. Das Kabelstück ist nun hälftig mit einer Schutzummantelung versehen.

Das Kabelstück wird nun waagerecht über einem Erdgas-Breitbrenner durch beidseitiges Festklemmen der Kabelseelen in je einem Stativ befestigt und in waagerechter Lage fixiert, so daß die Grenze zwischen ummanteltem und nicht ummanteltem Kabelstück genau über der Mitte der Brennerdüse liegt und der Schlitz bzw. die Flamme des Breitbrenners beide Seiten des Kabelprüflings je 3 cm breit bestreicht. Dann wird die Brennerflamme entzündet. Nach 5 Sekunden brennt der ungeschützte Kabelbereich mit kräftiger Flamme, während der geschützte Teil nur ein mittleres Aufschäumen ohne Flammentwicklung zeigt. Nach 1 Minute ist der ungeschützte Kabelmantel bereits aufgeplatzt und brennt stark, der geschützte Teil hat noch seine ursprüngliche, lediglich durch das Aufschäumen der Ummantelung verdickte Gestalt. Nach 5 Minuten wird der Versuch abgebrochen: Der ungeschützte Teil des Kabels ist bis auf die stark verfärbte Kupferseele und Schlackereste abgebrannt, während der geschützte Teil des Kabel-

Le A 21 866

prüflings noch über den, wenn auch verkohlten, aber in der Geometrie noch klar erhaltenen und funktionsfähigen Aufbau (3 Kabelseelen mit Isolation enthalten in einem Kabelmantel nebst Ummantelung desselben) verfügt. Etwa 3 cm neben der Beflammung durch den Brenner ist die Kupferseele noch blank.

## Beispiel 14

Eine Folie gemäß Beispiel 3 wird dadurch, daß man sie gemeinsam mit einem Glasfasergewebe über einen auf 150°C beheizten Kalander laufen läßt auf dieses aufkaschiert. Auch Flammkaschierung ist hier möglich. Aus dieser nunmehr einseitig mit dem Glasgewebe verstärkten ca. 1,5 mm starken Folie werden Bänder geschnitten. Diese Bänder sind besonders geeignet zur Umwickelung von Rohren oder Kabeln bzw. Kalbelbahnen zum Schutz gegen Feuereinwirkung.

Daß man das elastisch-flexible Material aber auch zum Verschließen von Mauerdurchbrüchen verwenden kann, ist wie folgt zu verdeutlichen: In einen Schaumbetonblock von 10 cm Stärke wird ein Loch mit 8 cm Durchmesser gebohrt. In dieses Loch wird ein Knäuel gesteckt, das durch Zusammenknüllen eines DIN A 4-großen Blattes der oben beschriebenen Glasgewebe-verstärkten Folie erhalten wird. Dieses Knäuel bleibt infolge seiner Ausdehnungsfähigkeit in dem Loch gut stecken. Unter dieses Loch wird nun ein Bunsenbrenner mit hoher entleuchteter Flamme gestellt. Nach 2 Stunden ist die über dem Bunsen-

Le A 21 866

brenner befindliche Schachtöffnung des Loches, das mit dem Knäuel verschlossen wurde, noch gegen den Durchtritt der Brennerflamme verschlossen. Es hat sich flammenseitig ein Pfropfen aus aufgeschäumtem und verkohltem Material gebildet.

Beispiel 15

Aus einem Material (als Granulat) gemäß Beispiel 5 wird bei 190°C auf einer Schneckenmaschine ein Rohr mit Wandstärke 3 mm und lichter Weise 15 mm extrudiert und achsparallel aufgeschnitten. Es entsteht ein schlauchartiger Formling, der auf Elektrokabel aufgezogen werden kann und diese vor Feuereinwirkung schützt. Bei Extrusion unter gleichen Bedingungen zu einem Dichtungsprofil erhält man quasi endlose Dichtungsbänder für z.B. Feuerschutztüren.

Le A 21 866

II) Beispiele 1 - 29 für Mischungen aus Melaminsalzen
   und Ethylendiaminphosphat

Herstellung der Prüfkörper:

Alle eingesetzten Bindemittel wurden in flüssiger Zubereitung, d.h. zumeist in Form von Lösungen, bzw. Dispersionen in Wasser oder anderen geeigneten Lösungsmitteln eingesetzt. Diese wurden auf einen Feststoffgehalt von 5 - 30 % eingestellt und dann mit dem Wirkstoffgemisch das auf eine Korngröße von 0,1 mm Durchmesser vermahlen war, versetzt, bis eine streichfähige, bzw. kittartige Masse entstand.

Diese Masse wurde in einer Silikonform gegebenenfalls durch mehrmaliges Eintragen und Trocknen bei 50°C zu Prüfplättchen der Maße 2x2x0,2 cm verarbeitet.

Diese Prüfplättchen wurden auf ein Drahtsieb mit Maschenweite 2 mm aufgelegt und von oben unter einem Winkel von 45° mit der Spitze des Flammenkegels eines entleuchteten Erdgasbunsenbrenners beflammt.

Nach 15 und 30 Sekunden Einwirkung wurde die Flamme für 3 Sekunden entfernt und ein ev. Nachbrennen festzustellen (+=ja; -=nein). Nach 3 Minuten wurde der gebildete Intumeszenzschaum beurteilt:

Le A 21 866

1 = geringe Intumeszenzschaumbildung

2 = Volumenzuwachs um 100 - 200 %

3 = Volumenzuwachs um mehr als 200 %

Die Versuchsergebnisse zeigen, daß in allen Fällen deutliche Intumeszenz bei Beflammung gegeben ist und in nahezu allen Fällen kein Nachbrennen auftritt.

Die Versuche sind im folgenden tabellarisch aufgelistet:

Ethylendiaminphosphat wird in Form des Neutralisationsproduktes aus Ethylendiamin und $H_3PO_4$ in getrockneter Form eingesetzt und als EPD bezeichnet.

Als Salze von Cyanursäureabkömmlingen werden hier Salze aus Melamin (M) und $H_3PO_4$ (P) in verschiedenen Molverhältnissen, abgekürzt MP, eingesetzt.

Le A 21 866

Le A 21 866

| Beispiel Nr. | Bindemittelzubereitung | | Salzgemisch | | | | | | | |
| | Bindemittel Typ | Lösungsmittel | Gehalt Bindemittel [%] | Einsatz Zubereitung [%] | Einsatz MP [%] | EP-Gehalt [%] | MP-Gehalt [%] | [1:x] Molverhl. M:P | Nachbrennen | Volumenzuwachs [Vol%] |
|---|---|---|---|---|---|---|---|---|---|---|
| 1 | kein Bindemittel | $H_2O$ | – | 0,3 | 0,6 | 50 | 50 | 0,75 | – | 3 |
| 2 | | | | | | 25 | 75 | 0,75 | – | 3 |
| 3 | | | | | | 40 | 60 | 0,5 | – | 3 |
| 4 | | | | | | 40 | 60 | 0.9 | – | 3 |
| 5 | Alkydharz-Klarlack | Benzin | 30 | 20 | 25 | 50 | 50 | 0,75 | – | 2 |
| 6 | techn. Polyisocyanat (MDI) | $CH_2Cl_2$ | 20 | 19 | 33 | 40 | 60 | 0,8 | – | 3 |
| 7 | Celluloseacetobutyrat | Ethylacetat | 10 | 20 | 6 | 50 | 50 | 0,6 | – | 2 |
| 8 | Styrol-Acrylnitril-Copolymerisat | " | 10 | 20 | 19 | 50 | 50 | 0,75 | – | 3 |
| 9 | Polyether-Polyisocyanat ($E_{21}$ Bayer AG) | " | 20 | 20 | 32 | 50 | 50 | 0,75 | – | 3 |
| 10 | anionischer Polyurethanlatex (DLN) | $H_2O$ | 20 | 20 | 5,0 | 50 | 50 | 0,75 | – | 2 |
| 11 | Polyvinylacetatlatex | $H_2O$ | 25 | 20 | 34 | 40 | 60 | 0,1 | – | 3 |
| 12 | Butylacrylat-Acrylnitril Copo-Dispersion | $H_2O$ | 20 | 20 | 30 | 40 | 60 | 0,1 | – | 2 |
| 13 | Kationische Stärke | $H_2O$ | 5 | 20 | 33 | 50 | 50 | 0,8 | – | 3 |
| 14 | Methylcellulose | $H_2O$ | 6 | 20 | 30 | 50 | 50 | 0,2 | – | 3 |
| 15 | Polyacrylamid | $H_2O$ | 6 | 20 | 20 | 50 | 50 | 0,75 | – | 3 |
| 16 | Melamin-Formaldehydharz | $H_2O$ | 20 | 20 | 18 | 50 | 50 | 0,6 | – | 2 |

0104350

| Beispiel Nr. | Bindemittel Typ Bindemittelzubereitung | Lösungsmittel | [%] Gehalt Bindemittel | [%] Einsatz Zubereitung | [%] Einsatz MP | [%] EP-Gehalt | [%] MP-Gehalt | [1:x] Molverhl. M:P | Nachbrennen | Volumenzuwachs [Vol%] |
|---|---|---|---|---|---|---|---|---|---|---|
| | | | | | | Salzgemisch | | | | |
| 17 | Harnstoff-Formaldehydharz | $H_2O$ | 20 | 20 | 20 | 50 | 50 | 0,5 | - | 2 |
| 18 | Adipinsäureglykol-Polyester | % | 100 | 20 | 30 | 50 | 50 | 1 | - | 3 |
| 19 | " | % | 100 | 20 | 30 | 50 | 50 | 0,5 | - | 3 |
| 20 | Lekutherm-Epoxyharz (X 257 Bayer AG) | % | 100 | 20 | 32 | 50 | 50 | 0,8 | - | 3 |
| 21 | Ethylen-Vinylacetat (45) Copolym. | t-Butanol | 10 | 20 | 1,0 | 50 | 50 | 0,6 | - | 3 |
| 22 | Naturkautschuk | Toluol | 5 | 20 | 1,0 | 50 | 50 | 0,7 | - | 2 |
| 23 | Gelatine | $H_2O$ | 5 | 20 | 10 | 50 | 50 | 0,1 | - | 2 |

- 30 -

Beispiel 24

Ein Salzgemisch aus 90 Teilen EDP und 10 Teilen MP (1:0,15) wird mit einer 7,5 %igen Lösung kationischer Stärke zu einer Streichfarbe angerührt. Es werden noch 10 Teile $TiO_2$-Weißigment hinzugesetzt. Mit dieser Streichfarbe werden Tapetenpapiere ca. 1 mm dick beschichtet. Man erhält eine Intumeszenzbeschichtung, die die Tapete für die Wandbekleidung gefährdeter Räume geeignet macht. In analoger Weise kann eine bereits tapezierte Wand mit der Beschichtungsformulierung feuerhemmend in üblicher Art gestrichen werden.

Beispiel 25

In 10 Teilen eines hochviskosen Silikonöls (Öl M 300 000, Bayer AG) werden 22 Teile des in Beispiel 8 verwendeten Salzgemisches eingearbeitet. Man erhält einen Kitt, der beim üblichen Beflammungstest nicht anbrennt und eine Volumenexpansion von 300 % zeigt.

Beispiel 26

Auf einem Heizkalander werden bei 145°C in 100 Teile Ethylen-Vinylacetat-Copolymerisat (Vinylacetatgehalt ca. 45 % 400 Teile des in Beispiel 8 verwendeten Salzgemisches eingearbeitet. Nach dem Abziehen von der Walze erhält man eine flexibele Folie (1,5 mm Stärke),

Le A 21 866

- 32 -

die im Beflammungstest ohne nachzubrennen um 250 Vol %
expandiert, ohne dabei zu schmelzen. Die Unterlage wird
vor dem Flammzutritt isolierend geschützt.

Beispiel 27

In 100 Teilen Wasser werden in einem Kneter 1 Mol Melamin
und 1 Mol Ethylendiamin mit 1,75 Mol $H_3PO_4$ (85 %ig) verknetet. Man erhält nach Abkühlen einen Salzbrei. Dieser
bildet beim Trocknen im Umlufttrockenschrank bei 120°C
einen festen Kuchen. Dieser wird zu einem Granulat mit
Korngrößen um ∅ 5 mm zerkleinert und abgesiebt. Dieses
Granulat bildet bei Beflammung unter ca. 500 % Volumenexpansion einen isolierenden Intumeszenzschaum.

Mit derartigem Granulat gefüllte Papierhülsen dienen als
Fertigteile zum reversiblen Verschluß von Löchern in
Brandmauern, durch die z.B. Kabel geführt werden. Mit
diesem Granulat gefüllte Polyethyltüten oder Strickschläuche dienen zum reversiblen Verschluß von Kabeltrassendurchführungen in Brandabschnitten.

Beispiel 28

Beispiel 27 wird wiederholt, jedoch wird die Wassermenge
verdoppelt und der Salzbrei mit 100 Teilen Mineralwolle
vor dem Trocknen verknetet. Außerdem werden noch 20
Teile Stärke zugesetzt. Dieses Granulat bildet weniger

Le A 21 866

Staub bei der Verarbeitung und zeigt bei 300 %iger Volumenexpansion eine bessere mechanische Widerstandfähigkeit des Intumeszenzschaumes. Es dient für Schüttungen mit Brandschutzwirkung.

Beispiel 29

An Hand der Abmischung von Ethylendiamin, Melamin und Melaminphosphat und Silikathohlperlen soll verdeutlicht werden, daß die erfindungsgemäßen Intumeszenzmassen besonders vorteilhafte Eigenschaften haben.

a) 20 Tle Bentonitfett (Calypsol G 203) werden verknetet mit 35 Tlen eines Melaminphosphates aus 1 Mol Melamin und 0,75 Mol $H_3PO_4$. Man erhält einen Kitt mit einem Penetrometerwert nach Klein von 200, d.h. eine weiche, gut verarbeitbare Konsistenz.

Eine Kugel dieses Kittes (Ø ca. 1 cm) wird mit einem Bunsenbrenner beflammt. Der Kitt zeigt keine Intumeszenz, vielmehr beginnt er ruhig abzubrennen. Dieser Kitt ist für Zwecke des vorbeugenden Brandschutzes wenig geeignet.

b) 20 Tle Bentonitfett wie oben werden mit 50 Tlen Ethylendiaminphosphat zu einem Kitt verknetet, dessen Konsistenz dem obigen Material gleicht.

Beim Beflammen wird eine starke Intumeszenz beobachtet, in der Erhitzungszone erfolgt ein relativ starkes "Kochen" des Kittes bevor sich der Intu-

Le A 21 866

meszenzschaum bildet, es besteht die Gefahr des Abrutschens des Schaums von der Oberfläche des Prüfkörpers. Dieser Kitt ist für Zwecke des vorbeugenden Brandschutzes prinzipiell geeignet, obgleich ein
Abrutschen des Intumeszenzschaumes unerwünscht ist.

c) 20 Tle Bentonifett wie oben werden verknetet mit 55
Tlen eines Gemisches aus 50 Tlen Ethylendiaminphosphat, 40 Tlen Melamin und 10 Tlen Melaminphosphat
wie bei b). Der Kitt hat eine Konsistenz wie bei
a).

d) 20 Tle Betonitfett wie oben werden verknetet mit
40 Tlen eines Gemisches aus 50 Tlen Ethylendiaminphosphat und 50 Tlen Melaminphosphat wie bei b).
Man erhält einen weichen Kitt mit der Konsistenz
wie bei a).

e) 10 Tle der Kitte c) und d) werden mit 2 Tlen Silikathohlperlen mit einem Schüttgewicht von 300 g/L
und Korndurchmessern unter 300 µm verknetet. Dabei
ändert sich die Penetrometerzahl fast garnicht, wegen des Rolleffektes der Kügelchen.

Bei der Beflammung zeigen die Proben nach c), d)
und e) eine ausgezeichnet Intumeszenz ohne Abrutschen des Schaumes. sie sind für Zwecke des vorbeugenden Brandschutzes hervorragend geeignet und
brennen nicht nach.

Le A 21 866

Patentansprüche

1. Werkstoffe mit Intumeszenzeigenschaften, dadurch gekennzeichnet, daß sie als intumeszenzvermittelnden Wirkstoff Ethylendiaminphosphat in Kombination mit Cyanursäureabkömmlingen bzw. deren Salzen enthalten.

2. Oligomere, Polymere, bzw. oligomere und/oder polymere Werkstoffe gemäß Anspruch 1, dadurch gekennzeichnet, daß sie mindestens 10 Gew.-% Ethylendiaminphosphat in Kombination mit Melamin und/oder Melaminabkömmlingen eingearbeitet enthalten und daß das eingearbeitete Material mindestens 20 % des Werkstoffs mit Intumeszenzeigenschaften ausmacht.

3. Thermoplastisch verarbeitbare Polymere, bzw. polymere Werkstoffe gemäß Anspruch 1 und 2.

4. Verwendung von Werkstoffen mit Intumeszenzeigenschaften gemäß Anspruch 1 bis 3 zur Herstellung von Formkörpern.

5. Formteile mit Intumeszenzeigenschaften hergestellt unter Verwendung der Werkstoffe gemäß Anspruch 1.

Le A 21 866